# FASCICULE DE BREVET EUROPEEN

(11) **EP 1 953 698 B1**
(45) Date de publication et mention de la délivrance du brevet: **12.08.2015**
(21) Numéro de dépôt: 08150538.0
(22) Date de dépôt: 23.01.2008
(51) Int. Cl.: G06T 3/40

(54) **Procédé de traitement d'images prises par une caméra embarquée sur véhicule**
Verarbeitungsverfahren von Bildern, die mit einer Kamera an Bord eines Fahrzeugs aufgenommen wurden
Method for processing images captured by a camera mounted on a vehicle

(30) Priorité: 01.02.2007 FR 0700723
(43) Date de publication de la demande: 06.08.2008
(73) Titulaire: VALEO VISION, 93012 Bobigny Cedex (FR)
(72) Inventeur: Fleury, Benoist, 94300 Vincennes (FR)
(74) Mandataire: Tran, Chi-Hai

(56) Documents cités:
- EP-A- 0 399 663
- EP-A- 1 351 189
- EP-A1- 0 651 350
- WO-A-00/25267
- GB-A- 2 139 846
- US-A1- 2003 198 393
- ROBERTSON G G ET AL: "THE DOCUMENT LENS" UIST. PROCEEDINGS OF THE ANNUAL ACM SYMPOSIUM ON USER INTERFACE SOFTWARE AND TECHNOLOGY, 3 novembre 1993 (1993-11-03), pages 101-108, XP008001164
- BISSETT B: "SCALING BINARY IMAGES: KEY TO HIGH-QUALITY IMAGING SYSTEMS", COMPUTER TECHNOLOGY REVIEW, WESTWORLD PRODUCTION, BEVERLY HILL, CA, US, vol. 11, no. 16, 1 February 1992 (1992-02-01), pages 109-110,112, XP000248512, ISSN: 0278-9647

## Description

L'invention concerne un procédé de traitement d'images prises par une caméra embarquée sur véhicule, notamment un véhicule automobile.

Des applications dites d'aide à la conduite nécessitent en effet la prise d'images par des caméras, par exemple pour détecter des piétons/des obstacles afin d'en avertir le conducteur (affichage, avertissement sonore ou visuel ...) et/ou de déclencher une commande automatique appropriée d'un organe du véhicule (freins...).

Dans la suite du présent texte, on utilisera indifféremment le mot caméra ou le mot capteur pour désigner des appareils de prise d'images numériques, comme des caméras de type CCD ou CMOS ou des capteurs couleur ou noir et blanc, ainsi que les capteurs infrarouge.

Certaines de ces applications requièrent des images de la scène de la route avec un champ latéral important, de façon à avoir une grande zone de détection, mais également des images de forte résolution, de façon à augmenter la distance de détection, et, ainsi, à laisser plus de temps au conducteur ou au véhicule de réagir de façon appropriée en cas de besoin.

Or, la résolution d'une image, son nombre de pixels, est déterminée par le choix du capteur/de la caméra choisi(s). Par exemple, un capteur de type VGA donne des images de 640 par 480 pixels, et la résolution pour un tel capteur peut être choisie, en fonction de l'angle d'ouverture de champ horizontal, de façon à avoir soit un angle de champ de 40° avec une résolution de 16 pixels par degré, soit un angle de champ de 20° avec une résolution de 32 pixels par degré.

Si l'on veut à la fois un angle de champ important et une haute résolution par degré d'ouverture de champ, on utilise alors un capteur de plus grande définition. Si l'on passe ainsi à un capteur dit « mega pixel », dont le nombre de pixels dépasse 1 million, on peut cumuler les deux : un capteur apte à prendre des images de 1280 par 960 pixels permettra d'obtenir à la fois un angle d'ouverture de champ de 40° et une résolution de 32 pixels par degré.

Avec un tel capteur, par comparaison avec le capteur VGA précédent, on obtient des images ayant un nombre de pixels multiplié par quatre. La puissance de calcul et la capacité de mémoire des composants électroniques/informatiques requises pour mettre en oeuvre le traitement de telles images s'en trouvent multipliées d'autant. Le coût de traitement s'en trouve accru, et il peut même arriver qu'il devienne impossible de traiter en temps réel l'image, faute de processeur suffisamment rapide par exemple.

Il existe des solutions optiques pour surmonter cet inconvénient, comme par exemple celle décrite dans le brevet EP 1 713 017, qui propose une lentille particulière dans l'objectif associé au capteur, lentille qui augmente la résolution du capteur dans la zone centrale de l'image prise par le capteur en question. Cette solution est efficace pour obtenir des images de résolution maximale dans la zone la plus intéressante, généralement la zone centrale de l'image (en considérant qu'un objet lointain est pertinent s'il est dans l'axe du véhicule, et donc au milieu de l'image, la caméra étant généralement positionnée selon l'axe longitudinal du véhicule), et de résolution inférieure pour les zones plus périphériques afin d'alléger les moyens de traitement de ces images. Cette solution n'est cependant pas dénuée de tout inconvénient : la lentille est assez complexe à faire, donc coûteuse. En outre, la position de la zone à résolution maximale est fixée dans l'image, et la différence de résolution entre zone centrale et périphérie est limitée. Il serait donc intéressant de trouver une alternative à cette solution optique.

La demande de brevet US 2003/0198393 A1 décrit un procédé de traitement d'image acquise par une caméra distante.

L'invention a alors pour but un nouveau mode de traitement d'images par capteur embarqué qui surmonte ces inconvénients, et qui permette ainsi une plus grande flexibilité, concernant notamment le positionnement de la zone à résolution maximale, les différences possibles de résolution d'une zone à l'autre de l'image. Subsidiairement, elle a pour objet un tel mode de traitement qui permette d'utiliser des capteurs disponibles, sans modifications de leurs objectifs.

L'invention a pour objet un procédé de traitement d'images prises par une caméra embarquée sur véhicule, tel qu'on diminue la taille de l'image originale avec un taux d'échantillonnage variable (d'une zone à l'autre de l'image). On substitue ainsi une solution optique par une solution de type informatique/électronique (bien qu'on puisse aussi envisager de combiner les deux), ce qui ouvre de nouvelles possibilités : en choisissant la variation/le gradient de taux d'échantillonnage, on peut choisir des capteurs de haute définition et de grande largeur de champ, et ajuster en fonction des besoins la taille et le positionnement de la zone d'intérêt qui aura la résolution maximale dans l'image. La zone d'intérêt est généralement la zone centrale de l'image, mais elle peut se trouvée décalée, excentrée dans une zone « sensible ». Et l'invention permet de diminuer la taille de l'image « autour » de cette zone sensible à la place de la zone centrale, liberté qu'une solution purement optique ne permet pas. Enfin, on peut conserver une grande ouverture de champ horizontal, critère souvent très important dans les applications visées.

Un avantage de la présente invention réside dans sa simplicité et son mode de fonctionnement en temps réel.

Selon un mode de réalisation, l'image originale est sub-divisée en une zone centrale ou zone « sensible » dont on conserve la résolution, et des zones périphériques, dont le taux d'échantillonnage augmente avec la distance à ladite zone centrale ou zone « sensible » : plus on s'éloigne de la zone d'intérêt, plus on se permet de perdre en résolution pour alléger les calculs prévus à partir des images prises par la caméra. On effectue ainsi un sous-échantillonnage des zones de moindre intérêt et on conserve la résolution originale dans la zone d'intérêt, ce qui conforte le caratère de simplicité et d'originalité du procédé seon l'invention.

On peut par exemple choisir un taux d'échantillonnage T de 1/2 puis de 1/3 pour les zones périphériques selon leur distance à la zone centrale ou zone « sensible » : on ne garde que la moitié des pixels des zones directement adjacentes à la zone d'intérêt, et on ne garde plus que le tiers des pixels des zones encore plus éloignées de celle-ci.

Tout autre choix est possible : choix en matière de niveau de diminution, choix en matière du dimensionnement et de la segmentation des zones dites périphériques.

Concrètement, on peut diminuer la taille de l'image originale en la sub-divisant en une matrice de lignes et de colonnes de pixels, en ne conservant que certaines lignes et certaines colonnes. Et on conserve d'autant plus de lignes et de colonnes qu'elles sont proches de la zone centrale ou de la zone dite « sensible » de l'image. Cela revient à sélectionner les colonnes, respectivement les lignes, en fonction de leur distance à l'axe médian vertical, respectivement horizontal, de l'image, quand la zone d'intérêt est la zone centrale de l'image. On regroupe les colonnes, réciproquement les lignes, en groupes de 1, puis de 2 puis de 3 colonnes au fur et à mesure qu'on s'éloigne de l'axe médian vertical, réciproquement horizontal, de l'image.

Un exemple de cette façon de procéder comprend les étapes suivantes :
- on conserve les deux colonnes entre lesquelles se trouve l'axe médian vertical de l'image,
- on conserve une colonne sur deux des deux groupes de colonnes de part et d'autres des colonnes précédentes,
- on conserve une colonne sur trois des groupements de colonnes situées de part et d'autre des colonnes précédentes,
- on conserve les deux lignes entre lesquelles se trouve l'axe médian de l'image,
- on conserve une ligne sur deux des deux groupes de lignes de part et d'autres des lignes précédentes,
- on conserve une ligne sur trois des groupes de lignes situées de part et d'autre des lignes précédentes.

Une ligne, respectivement une colonne, est une juxtaposition de zones, chaque zone correspondant à un certain nombre de pixels : conserver ou supprimer des lignes ou des colonnes revient à conserver/supprimer sélectivement les pixels de ladire ligne ou ladite colonne.

Cette diminution en lignes et en colonnes peut se faire naturellement de façon simultanée à l'aide d'un calculateur approprié : on fait ainsi une « distorsion orthogonale » de l'image originale.

Comme évoqué plus haut, on conserve de préférence la résolution de l'image originale dans la zone centrale ou la zone « sensible » de l'image (ou tout au moins on ne la réduit que faiblement par comparaison avec les diminution des autres zones de l'image).

L'invention prévoit aussi la possibilité que l'image contienne plusieurs zones d'intérêt auxquelles on conserve une haute résolution, de préférence leur résolution initiale, avec diminution des zones périphériques autour de chacune de ces zones d'intérêt.

Le procédé selon l'invention permet donc de conserver la largeur angulaire de champ de l'image originale.

Dans le cas où la zone d'intérêt n'est pas une zone centrale de l'image, on déplace artificiellement les axes médian de l'image originale, afin de conserver la résolution originale dans une zone sensible excentrée.

On peut déterminer cette zone sensible de façon statique ou dynamique : soit sa localisation et sa taille dans l'image est prédéterminée, soit elle va tenir compte en temps réel des conditions de conduite ou des informations véhicule disponibles.

En dynamique, on peut en effet déterminer la taille et la localisation de la zone sensible en utilisant les informations véhicule, comme l'assiette du véhicule, l'angle au volant, ou encore l'accélération axiale ou transversale du véhicule, ou en utilisant d'autres informations, comme des informations sur toute détection d'objets ou d'infrastructures par la caméra elle-même ou d'autres capteurs embarqués sur véhicule.

On peut restituer à l'image sa taille originale après une diminution comme expliquée plus haut, en multipliant le nombre des lignes et colonnes les plus éloignées de la zone centrale ou sensible : on perd en résolution, bien sûr, par rapport à l'image originale, mais cette restitution peut se faire rapidement à puissance de calcul modéré, si on en a besoin.

L'invention a également pour objet le dispositif de mise en oeuvre du procédé décrit plus haut, dispositif utilisant une caméra et des moyens de traitement des images prises par ladite caméra.

L'invention a également pour objet le véhicule équipé d'au moins un tel dispositif.

L'invention est décrite ci-après plus en détail à l'aide de figures représentant un mode de réalisation non limitatif de l'invention :
- Les figures 1a, 1b permettent d'expliquer un mode de réalisation du traitement de diminution selon l'invention,
- La figure 2 est une représentation très schématique d'un algorithme utilisant le traitement d'image selon l'invention,
- Les figures 3a, 3b, 3c sont des représentations des images originales (3a) et diminuées/réduites (3b, 3c) après traitement selon l'invention.

Un exemple de réalisation du procédé selon l'invention est le suivant : on monte un capteur noir et blanc (on peut aussi choisir un capteur couleur) derrière le pare-brise d'un véhicule automobile pour prendre des images de la scène de route. Le but est de pouvoir détecter avec ce capteur des obstacles sur la route, des piétons, des conducteurs de motos, notamment. Le capteur prend des images numériques avec la résolution suivante : 1280 pixels sur 960 pixels. Il est équipé d'un objectif dont le champ horizontal est de 40°.

Selon une première variante, on cherche à garder la résolution de l'image originale au centre, et à la diminuer de façon croissante, au fur et à mesure que la zone considérée s'éloigne de cette zone centrale.

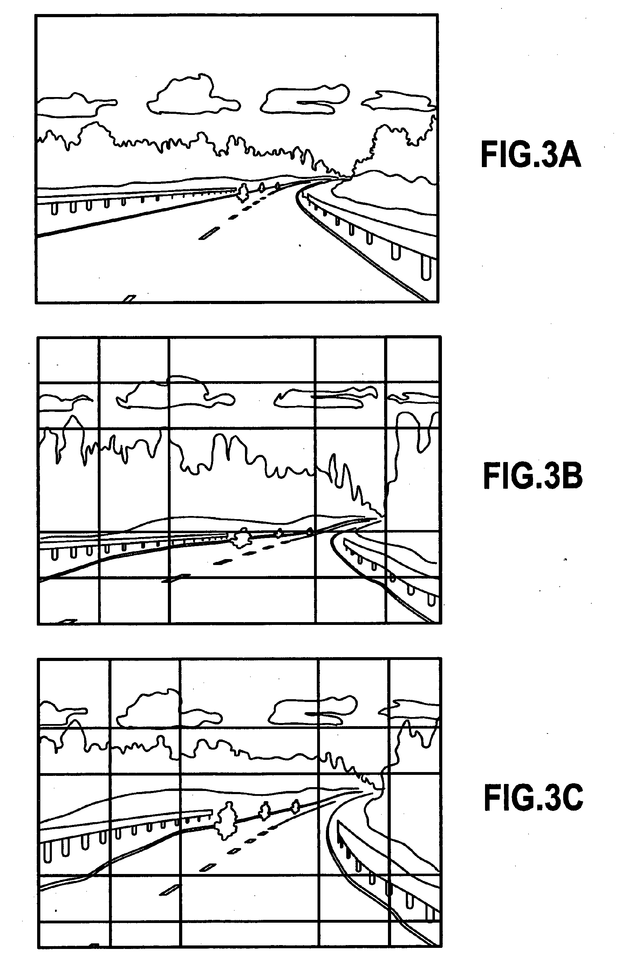

Ainsi, la figure 3a représente une image originale, c'est-à-dire telle que prise par le capteur muni de son objectif à travers le pare-brise selon un axe correspondant approximativement à l'axe longitudinal du véhicule.

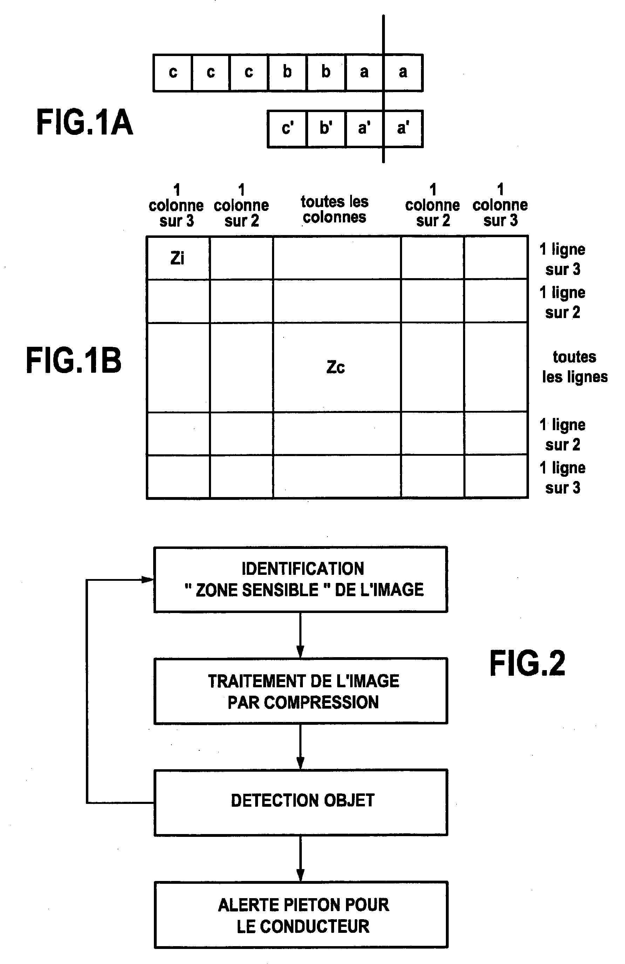

On sub-divise en zones l'image originale à l'aide d'une trame de lignes et de colonnes de même taille (non représentée sur la figure 3a). Ces lignes et colonnes délimitent donc des zones sous forme de carrés ou de rectangles, qui sont tous de même taille (commprenant le même nombre de pixels). Selon l'invention, on conserve la résolution/la taille de la zone (ou du regroupement de plusieurs zones telles que définies plus haut) qui se trouve au centre de l'image : c'est la zone centrale Zc. Mais les autres zones périphériques Zi vont être diminuées en taille sous la forme de zones Zi', comme représenté en figure 1 b.

La figure 1a explique très schématiquement la façon dont on effectue la diminution : elle représente partiellement la ligne I1 de la trame originale de l'image originale, passant par le milieu de cette image. L'axe O est l'axe médian vertical de l'image. On a donc du côté gauche de l'axe O 6 zones a, b, c de résolution originale (chaque zone est un ensemble de n pixels, n étant le même pour toutes les zones en question). La ligne I2 est la ligne obtenue après diminution de la ligne I1 :
- la zone a est conservée sans modification, car elle appartient à la zone centrale Zc dont on veut garder la haute résolution : c'est la zone a' de la ligne I2.
- Les deux zones b adjacentes à la zone a sont comprimées à 50%, car un pixel sur deux est conservé : c'est la zone b' de I2.
- Les trois zones c suivantes sont comprimées à 1 tiers, un pixel sur trois est conservé : c'est la zone c' de la ligne I2.

Il est entendu que ce mode de diminution est effectué de manière similaire sur les colonnes de l'image initiale, et ceci pour toutes les zones unitaires se situant de part et d'autres de l'axe de symétrie vertical et de l'axe de symétrie horizontal de l'image originale. On effectue ainsi une distorsion / une diminution orthogonale. Dans la pratique, le calculateur qui effectue cette diminution peut bien sûr calculer la diminution des lignes et des colonnes simultanément.

La figure 1b représente la trame de l'image une fois compressée : la zone Zc est conservée, les zones suivantes sont comprimées : d'abord une colonne et une ligne sur 2, puis une colonne et une ligne sur 3 sont conservées, comme détaillé plus haut.

Il va de soi que l'on peut modifier les taux d'échantillonnage et le nombre de lignes et colonnes affectés par un taux d'échantillonnage donné. On peut aussi faire croître plus vite ou moins vite le taux d'échantillonnage au fur et à mesure qu'on s'éloigne de la zone Zc. On peut aussi avoir non pas deux taux d'échantillonnage, mais plus, trois ou quatre par exemple. Tous ces paramètres sont notamment fonction de la résolution initiale du capteur choisi, et de la perte de résolution sur les bords de l'image qui est acceptable en fonction de l'application visée.

La figure 3b représente l'image de la figure 3a après diminution, avec représentation de la trame comprimée. On voit que la zone centrale non diminuée ne comprend pas la moto et son conducteur, alors qu'il peut être utile d'avoir justement une résolution maximale sur ce type d'objet/de personnes mobiles.

C'est pourquoi l'invention propose aussi une seconde variante, qui se déduit de la première dans son mode de diminution : Cette fois, la zone « sensible » ou zone d'intérêt n'est plus au centre, mais décalée verticalement et/ou horizontalement. La figure 3c représente l'image selon la figure 3a une fois diminuée, avec la zone sensible conservée légèrement décalée vers le bas : cette fois, la moto et son conducteur sont entièrement dans cette zone de résolution maximale. Nous ne détaillons pas ici le mode de diminution, puisqu'il se déduit du précédent : même taux d'échantillonnage, mais cette fois autour de cette zone sensible décalée :
tout se passe comme si on déplaçait les axes médian vertical et horizontal de l'image originale.

On peut aussi passer d'une variante à l'autre dans le temps : c'est-à-dire rester en mode de diminution selon la première variante (zone centrale à résolution maximale), puis passer à la seconde (zone sensible décalée) si d'autres éléments permettent de détecter que la cible d'intérêt n'est pas au centre de l'image.

On peut donc avoir les mise en oeuvre de l'invention non limitatives suivantes :
- zone d'intérêt à résolution maximale : la zone centrale de l'image de façon permanente
- zone d'intérêt à résolution maximale : sa localisation dans l'image fluctue tout le temps en fonction d'informations véhicule (angle au volant, calcul d'assiette du véhicule) ou de la détection cible mobile par d'autres capteurs ...
- zone d'intérêt à résolution maximale : la zone centrale par défaut, et on repasse en zone » fluctuante » quand une autre information véhicule ou une information de détection de cible mobile arrive.

La figure 2 représente un algorithme très simplifié d'un procédé d'aide à la conduite utilisant l'invention dans sa variante « zone d'intérêt « fluctuante ». Ce procédé comprend les étapes suivantes :
- on identifie la taille et la localisation de la zone sensible/zone d'intérêt dans l'image prise par le capteur selon une ou plusieurs informations disponibles
- on diminue sélectivement l'image comme détaillé plus haut,
- on détecte l'objet, par exemple le piéton en bord de route, le conducteur de moto, dans la zone d'intérêt
- on déclenche une alerte auprès du conducteur (visuelle, sonore) pour qu'il prenne les mesures appropriées pour éviter l'accident.

Bien sûr, ces explications sont très simplifiées pour être plus clair : on ne rentre pas dans le détail du nombre d'images prises par seconde, car ce processus, comme l'étape de diminution elle-même, est itératif, avec des vérifications de cohérence dans le traitement d'images consécutives.

## Revendications

1. Procédé de traitement d'images de la scène de route prises par une caméra embarquée sur véhicule, **caractérisé en ce qu'**on diminue la taille de l'image originale avec un taux d'échantillonnage variable, l'image originale étant sub-divisée en une zone centrale (Zc) ou zone « sensible » (Zs) dont on conserve la résolution, et des zones périphériques (Zi), dont le taux d'échantillonnage (T1,T2) augmente avec la distance à ladite zone centrale (Zc) ou zone « sensible » (Zs).

2. Procédé selon la revendication précédente, **caractérisé en ce qu'**on utilise un taux d'échantillonnage T de 1/2 puis de 1/3 pour les zones périphériques selon leur distance (Zi) à la zone centrale (Zc) ou zone « sensible » (Zs).

3. Procédé selon l'une des revendications précédentes, **caractérisé en ce qu'**on diminue la taille de l'image originale en la sub-divisant en une matrice de lignes et de colonnes de pixels, et en ne conservant que certaines lignes et certaines colonnes.

4. Procédé selon la revendication précédente, **caractérisé en ce qu'**on conserve d'autant plus de lignes et de colonnes qu'elles sont proches de la zone centrale (Zc) ou de la zone dite « sensible » (Zs) de l'image.

5. Procédé selon la revendication précédente, **caractérisé en ce qu'**on sélectionne les colonnes, respectivement les lignes, en fonction de leur distance à l'axe médian vertical, respectivement horizontal, de l'image.

6. Procédé selon la revendication précédentes 4 ou 5, **caractérisé en ce qu'**on regroupe les colonnes, réciproquement les lignes, en groupes de 1 (a), puis de 2 (b) puis de 3 (c) colonnes au fur et à mesure qu'on s'éloigne de l'axe médian vertical, réciproquement horizontal, de l'image.

7. Procédé selon l'une des revendications précédentes 5 à 6, **caractérisé en ce que** - on conserve les deux colonnes (a) entre lesquelles se trouve l'axe médian vertical de l'image, - on conserve une colonne sur deux des deux groupes de colonnes de part et d'autres des colonnes précédentes (b), - on conserve une colonne sur trois des groupements de colonnes situées de part et d'autre des colonnes précédentes (c), - on conserve les deux lignes (a) entre lesquelles se trouve l'axe médian de l'image, - on conserve une ligne sur deux des deux groupes de lignes de part et d'autres des lignes précédentes (b), - on conserve une colonne sur trois des groupes de lignes situées de part et d'autre des lignes précédentes (c).

8. Procédé selon l'une des revendications précédentes, **caractérisé en ce qu'**on conserve la résolution de l'image originale dans la zone centrale (Zc) ou « sensible » (Zs) de l'image.

9. Procédé selon l'une des revendications précédentes, **caractérisé en ce qu'**on déplace les axes médian de l'image originale, afin de conserver la résolution originale dans une zone sensible (Zs) excentrée.

10. Procédé selon la revendication précédente, **caractérisé en ce qu'**on détermine la zone sensible (Zs) de façon statique ou dynamique.

11. Procédé selon la revendication précédente, **caractérisé en ce qu'**on détermine la zone sensible (Zs) de façon dynamique en utilisant les informations véhicule, comme l'assiette du véhicule, l'angle au volant, ou encore l'accélération axiale ou transversale du véhicule, ou en utilisant une information sur toute détection d'objets ou d'infrastructures.

12. Procédé selon l'une des revendications précédentes 5 à 7, **caractérisé en ce qu'**on restitue après diminution de l'image sa taille originale, en multipliant le nombre des lignes et colonnes les plus éloignées de la zone centrale (Zc) ou sensible (Zs).

13. Dispositif de mise en oeuvre du procédé selon l'une des revendications précédentes, **caractérisé en ce qu'**il utilise une caméra et des moyens de traitement des images prises par ladite caméra.

14. Véhicule équipé d'au moins un dispositif selon la revendication précédente.

## Patentansprüche

1. Vorrichtung zur Verarbeitung von Bildern der Straßenszene, die von einer im Fahrzeug eingebauten Kamera aufgenommen werden,
**dadurch gekennzeichnet, dass** die Größe des Originalbildes mit einer variablen Abtastrate verringert wird, wobei das Originalbild unterteilt ist in einen mittleren Bereich (Zc) bzw. "sensiblen" Bereich (Zs), dessen Auflösung beibehalten wird, und in Randbereiche (Zi), deren Abtastrate (T1, T2) mit der Entfernung zum mittleren Bereich (Zc) bzw. "sensiblen" Bereich (Zs) zunimmt.

2. Verfahren nach dem vorhergehenden Anspruch,
**dadurch gekennzeichnet, dass** eine Abtastrate T von 1/2 und dann von 1/3 für die Randbereiche (Zi) entsprechend ihrer Entfernung zum mittleren Bereich (Zc) bzw. "sensiblen" Bereich (Zs) verwendet wird.

3. Verfahren nach einem der vorhergehenden Ansprüche,
**dadurch gekennzeichnet, dass** die Größe des Originalbildes dadurch verringert wird, dass es in eine Matrix aus Pixelzeilen und -spalten unterteilt wird und nur bestimmte Zeilen und bestimmte Spalten beibehalten werden.

4. Verfahren nach einem der vorhergehenden Ansprüche,
**dadurch gekennzeichnet, dass** umso mehr Zeilen und Spalten beibehalten werden, je näher sie am mittleren Bereich (Zc) bzw. sogenannten "sensiblen" Bereich (Zs) des Bildes liegen.

5. Verfahren nach dem vorhergehenden Anspruch,
**dadurch gekennzeichnet, dass** die Spalten bzw. die Zeilen abhängig von ihrer Entfernung zur senkrechten bzw. waagerechten Mittelachse des Bildes ausgewählt werden.

6. Verfahren nach den vorhergehenden Ansprüchen 4 oder 5,
**dadurch gekennzeichnet, dass** die Spalten bzw. die Zeilen in Gruppen zu 1 (a), dann zu 2 (b), dann zu 3 (c) Spalten zusammengefasst sind, je nachdem wie groß die Entfernung zur senkrechten bzw. waagerechten Mittelachse des Bildes ist.

7. Verfahren nach einem der vorhergehenden Ansprüche 5 bis 6,
**dadurch gekennzeichnet, dass** die zwei Spalten (a) beibehalten werden, zwischen denen sich die senkrechte Mittelachse des Bildes befindet, jede zweite Spalte der zwei Spaltengruppen beidseits der vorhergehenden Spalten (b) beibehalten wird, jede dritte Spalte der Spaltengruppen beidseits der vorhergehenden Spalten (c) beibehalten wird, die zwei Zeilen (a) beibehalten werden, zwischen denen sich die Mittelachse des Bildes befindet, jede zweite Zeile der zwei Zeilengruppen beidseits der vorhergehenden Zeilen (b) beibehalten wird, jede dritte Zeile der Zeilengruppen beidseits der vorhergehenden Zeilen (c) beibehalten wird.

8. Verfahren nach einem der vorhergehenden Ansprüche,
**dadurch gekennzeichnet, dass** die Auflösung des Originalbildes im mittleren Bereich (Zc) bzw. "sensiblen" Bereich (Zs) des Bildes beibehalten wird.

9. Verfahren nach einem der vorhergehenden Ansprüche,
**dadurch gekennzeichnet, dass** die Mittelachsen des Originalbildes verschoben werden, um die Originalauflösung in einem außermittigen sensiblen Bereich (Zs) beizubehalten.

10. Verfahren nach dem vorhergehenden Anspruch,
**dadurch gekennzeichnet, dass** der sensible Bereich (Zs) statisch oder dynamisch festgelegt wird.

11. Verfahren nach dem vorhergehenden Anspruch,
**dadurch gekennzeichnet, dass** der sensible Bereich (Zs) dynamisch festgelegt wird unter Verwendung von Fahrzeugdaten wie der Niveaulage des Fahrzeugs, des Lenkradeinschlags oder auch der Axial- oder Querbeschleunigung des Fahrzeugs, oder unter Verwendung einer Information über jegliche Erfassung von Gegenständen oder das Straßennetz.

12. Verfahren nach einem der vorhergehenden Ansprüche 5 bis 7,
**dadurch gekennzeichnet, dass** nach der Verkleinerung des Bildes dessen Originalgröße durch Vervielfachung der Anzahl der am weitesten vom mittleren Bereich (Zc) bzw. sensiblen Bereich (Zs) entfernten Zeilen und Spalten wiederhergestellt wird.

13. Vorrichtung zur Durchführung des Verfahrens nach einem der vorhergehenden Ansprüche,
**dadurch gekennzeichnet, dass** sie eine Kamera und Mittel zum Verarbeiten der von der Kamera aufgenommenen Bilder verwendet.

14. Fahrzeug, ausgestattet mit wenigstens einer Vorrichtung nach dem vorhergehenden Anspruch.

## Claims

1. Method for processing of images of the road scene taken by a camera on board a vehicle, **characterised in that** the size of the original image is decreased with a variable sampling level, the original image being subdivided into a central zone (Zc) or "sensitive" zone (Zs) the resolution of which is preserved, and peripheral zones (Zi), the sampling level (T1, T2) of which increases with the distance to the said central area (Zc) or "sensitive" area (Zs).

2. Method according to the preceding claim, **characterised in that** a sampling level T of 1/2 then 1/3 is used for peripheral zones, according to their distance (Zi) to the central zone (Zc) or "sensitive" zone (Zs).

3. Method according to one of the preceding claims, **characterised in that** the size of the original image is reduced by sub-dividing it into a matrix of lines and columns of pixels, and preserving only certain lines and certain columns.

4. Method according to the preceding claim, **characterised in that** all the more lines and columns are preserved, the closer they are to the central area (Zc) or to the so-called "sensitive" area (Zs) of the image.

5. Method according to the preceding claim, **characterised in that** the columns and lines respectively are selected according to their distance respectively to the vertical and horizontal median axis of the image.

6. Method according to the preceding claims 4 or 5, **characterised in that** the columns and reciprocally the lines are grouped in groups of 1 (a), then 2 (b), then 3 (c) columns, when movement takes place away from the vertical and reciprocally the horizontal median axis of the image.

7. Method according to one of the preceding claims 5 to 6, **characterised in that**: the two columns (a) are preserved between which the vertical median axis of the image is located; one column out of two of the two groups of columns is preserved on both sides of the preceding columns (b); one column out of three is preserved of the groups of columns situated on both sides of the preceding columns (c); the two lines (a) are preserved between which the median axis of the image is located; one line out of two is preserved of the two groups of lines on both sides of the preceding lines (b); and one column out of three is preserved of the groups of lines situated on both sides of the preceding lines (c).

8. Method according to one of the preceding claims, **characterised in that** the resolution of the original image is preserved in the central (Zc) or "sensitive" (Zs) area of the image.

9. Method according to one of the preceding claims, **characterised in that** the median axes of the original image are displaced in order to preserve the original resolution in an eccentric sensitive area (Zs).

10. Method according to the preceding claim, **characterised in that** the sensitive area (Zs) is determined statically or dynamically.

11. Method according to the preceding claim, **characterised in that** the sensitive area (Zs) is determined dynamically using the vehicle data, such as the position of the vehicle, the steering angle, or the axial or transverse acceleration of the vehicle, or by using information concerning any detection of objects or infrastructures.

12. Method according to one of the preceding claims 5 to 7, **characterised in that**, after decrease of the image, its original size is restored by multiplying the number of lines and columns which are furthest from the central (Zc) or sensitive (Zs) area.

13. Device for implementation of the method according to one of the preceding claims, **characterised in that** it uses a camera and means for processing of the images taken by the said camera.

14. Vehicle equipped with at least one device according to the preceding claim.
